# EUROPÄISCHE PATENTSCHRIFT

(11) **EP 3 489 501 B1**
(45) Veröffentlichungstag und Bekanntmachung des Hinweises auf die Patenterteilung: **30.12.2020**
(21) Anmeldenummer: 18207580.4
(22) Anmeldetag: 21.11.2018
(51) Int. Cl.: F02K 9/52

(54) **EINSPRITZKOPF FÜR EIN TRIEBWERK, TRIEBWERK, RAKETE UND VERFAHREN ZUM HERSTELLEN EINES EINSPRITZKOPFS**
ENGINE, INJECTION HEAD FOR AN ENGINE, MISSILE AND METHOD FOR PRODUCING AN INJECTION HEAD
TÊTE D'INJECTION POUR UN MOTEUR, MOTEUR, FUSÉE ET PROCÉDÉ DE FABRICATION D'UNE TÊTE D'INJECTION

(30) Priorität: 24.11.2017 DE 102017127831
(43) Veröffentlichungstag der Anmeldung: 29.05.2019
(73) Patentinhaber: ArianeGroup GmbH, 82024 Taufkirchen (DE)
(72) Erfinder: Höglauer, Christoph, 83329 Waging am See (DE)
(74) Vertreter: Schornack, Oliver

(56) Entgegenhaltungen:
- DE-A1- 3 328 973
- DE-A1-102004 018 725
- FR-A1- 2 566 842
- US-A1- 2013 318 943

## Beschreibung

Die vorliegende Erfindung betrifft einen Einspritzkopf für ein Triebwerk, ein Triebwerk mit einem derartigen Einspritzkopf sowie eine Rakete mit dem Einspritzkopf oder dem Triebwerk.

In Raketentriebwerken werden Einspritzköpfe verwendet, um Treibstoffkomponenten für die Verbrennung in die Brennkammer zu leiten. Sie sind in der Regel an einem der Düsenöffnung des Triebwerks entgegengesetzten Ende der Schubkammer angeordnet und müssen somit hohen Drücken und Temperaturen standhalten. Gewöhnliche Einspritzköpfe enthalten eine Vielzahl von Einspritzelementen bzw. Düsenkörpern, die sich wiederum aus zahlreichen Einzelteilen zusammensetzen, welche beispielsweise über Schraub-, Schweiß- und/oder Lötverbindungen miteinander verbunden sind. Die Düsenkörper sind konventionell ebenfalls über derartige Verbindungen an einer Frontplatte des Einspritzkopfes montiert.

Ein Einspritzkopf für ein Raketentriebwerk ist beispielsweise im Dokument DE 10 2004 018 725 A1 beschrieben. In diesem Einspritzkopf sind Einspritzelemente angeordnet, die dazu dienen, Treibstoffströmungen in den Innenraum der Brennkammer einzuleiten. Die Einspritzelemente sind entweder rohrförmig ausgebildet oder durch eine Kombination von Rohren und einer oder mehreren Koaxialhülsen gebildet und mit einer Einspritzplatte und/oder einer Deckplatte verbunden.

Vor diesem Hintergrund ist es eine Aufgabe der vorliegenden Erfindung, einen Einspritzkopf für ein Triebwerk bereitzustellen, der schneller und einfacher montiert werden kann und den Treibstoff dennoch besser verteilt. Ferner ist es eine Aufgabe der Erfindung, ein Triebwerk und eine Rakete mit einem derartigen Einspritzkopf sowie ein Verfahren zur Herstellung eines solchen Einspritzkopfs bereitzustellen.

Diese Aufgabe wird durch einen Einspritzkopf mit den Merkmalen des Anspruchs 1, ein Triebwerk mit den Merkmalen des Anspruchs 12 und eine Rakete mit den Merkmalen des Anspruchs 13 sowie ein Verfahren mit den Merkmalen des Anspruchs 14 gelöst.

Der Einspritzkopf ist für ein Triebwerk, beispielsweise ein Raketentriebwerk, vorgesehen und umfasst eine eine Brennkammer des Triebwerks begrenzende Frontplatte mit Auslassöffnungen für eine erste Treibstoffkomponente, eine auf einer der Brennkammer abgewandten Seite der Frontplatte angeordnete Grundplattenanordnung, die eine Grundplatte und sich von der Grundplatte in Richtung der Brennkammer erstreckende Düsenkörper für eine zweite Treibstoffkomponente aufweist, wobei die Düsenkörper mit den Auslassöffnungen korrespondieren, beispielsweise fluchten, sowie eine zwischen der Frontplatte und der Grundplatte angeordnete erste Verteilerplatte. Die Düsenkörper durchsetzen die erste Verteilerplatte. In Bereichen der ersten Verteilerplatte um die die erste Verteilerplatte durchsetzenden Düsenkörper sind jeweils eine oder mehrere Durchgangsöffnungen ausgebildet.

Dieser Einspritzkopf kann vergleichsweise schnell und einfach, insbesondere maschinell, hergestellt werden, da die erste Verteilerplatte die erste Treibstoffkomponente verteilt, sodass auf an den einzelnen Düsenkörpern angeordnete Hülsen für die Verteilung des Treibstoffes verzichtet werden kann. Dadurch lassen sich die Kosten für die Fertigung, Montage und Prüfung des Einspritzkopfes erheblich reduzieren. Darüber hinaus ermöglicht die Ausgestaltung der ersten Verteilerplatte mit den Durchgangsöffnungen, die erste Treibstoffkomponente homogener zu verteilen. Die Anordnung der Durchgangsöffnungen und damit die Verteilung der ersten Treibstoffkomponente kann auf einfache Weise angepasst werden. Beispielsweise kann der Einspritzkopf dadurch auf einfache Weise für unterschiedliche Brennkammergeometrien und/oder Treibstoffarten ausgelegt werden. Da bei einem Einspritzkopf gemäß der vorliegenden Erfindung keine gesonderte Komponente, beispielsweise in Form eines sogenannten "Fuel-Manifold", erforderlich ist, zeichnet sich dieser Einspritzkopf außerdem durch ein niedrigeres Gewicht aus.

Die erste Verteilerplatte kann somit ein Volumen zwischen der Grundplatte und der Frontplatte in zwei Teilvolumina aufteilen. In der ersten Verteilerplatte können zum Beispiel über 1000 oder über 2000 oder über 4000 oder über 7000 Durchgangsöffnungen angeordnet sein. Alternativ ist es denkbar, dass in der ersten Verteilerplatte beispielsweise höchstens 1000 oder höchstens 2000 oder höchstens 4000 oder höchstens 7000 Durchgangsöffnungen angeordnet sind.

Um die Stabilität der Frontplatte zu erhöhen, kann diese mit Rippen versehen sein. Zusätzlich oder alternativ dazu kann die Frontplatte über eine Schraubverbindung mit der Verteilerplatte verbunden werden. Ferner kann die Frontplatte zusammen mit der Verteilerplatte aus einem Stück Werkstoff gefertigt werden, sodass die Frontplatte und die Verteilerplatte ein einziges Bauteil sind. Optional kann auch ein Teil eines Gehäuses, das zwischen der Frontplatte und der Verteilerplatte angeordnet ist, aus dem gleichen Stück Werkstoff gefertigt werden. Die Rippen können durch Fräsen hergestellt werden. Beispielsweise können die Rippen durch Fräsen mit einem T-Nut-Fräser hergestellt werden. Zwischen den Rippen entstehen somit Taschen, die zusammen eine Treibstoffkammer bilden. Dabei können die Rippen so angeordnet und dimensioniert sein, dass die Taschen untereinander fluidisch kommunizieren oder fluidisch voneinander getrennt sind. Mit anderen Worten ist eine fluidisch durchgängige Treibstoffkammer mit darin angeordneten Rippen vorgesehen oder es ist eine Vielzahl von voneinander getrennten Treibstoffkammern, die jeweils durch eine Tasche gebildet werden, vorgesehen. Jede der Durchgangsöffnungen ist in jedem Fall so in der ersten Verteilerplatte angeordnet, dass sie mit mindestens einer Tasche fluidisch kommuniziert (fluidisch gekoppelt ist).

Die Düsenkörper können koaxial zu den Auslassöffnungen angeordnet sein. Ferner können die Auslassöffnungen nicht nur für die erste Treibstoffkomponente, sondern für beliebige weitere Treibstoffkomponenten, insbesondere die zweite Treibstoffkomponente, vorgesehen sein. Bei der ersten Treibstoffkomponente handelt es sich beispielsweise um gasförmigen oder flüssigen Wasserstoff (H₂) und bei der zweiten Treibstoffkomponente um gasförmigen oder flüssigen Sauerstoff (O₂).

Vorzugsweise ist die erste Verteilerplatte plan. Sie kann insbesondere plattenförmig mit zwei parallel zueinander ausgerichteten Oberflächen, die von den Düsenkörpern durchsetzt werden, ausgestaltet sein. Ferner kann sie aus einem einzigen Stück Werkstoff hergestellt sein. Ihre Materialstärke beträgt beispielsweise mindestens 3 mm oder mindestens 4 mm oder mindestens 5 mm oder mindestens 7 mm oder mindestens 10 mm. Ferner kann die Materialstärke höchstens 30 mm, höchstens 20 mm, höchstens 15 mm oder höchstens 12 mm betragen.

Zumindest ein Teil der Durchgangsöffnungen kann zwischen dem Düsenkörper und der ersten Verteilerplatte ausgebildet sein. D.h., entlang zumindest eines Teils des Außenumfangs des jeweiligen Düsenkörpers kann ein Spalt zwischen dem Düsenkörper und der ersten Verteilerplatte vorgesehen sein.

Ferner können die Durchgangsöffnungen einen Ringspalt umfassen, der sich entlang eines Teils des Umfangs des jeweiligen Düsenkörpers oder entlang des gesamten Umfangs erstreckt. Der Durchmesser der Durchgangsöffnungen, in denen die Düsenkörper die erste Verteilerplatte durchsetzen, kann zwischen 2 und 20 mm oder zwischen 4 und 15 mm oder zwischen 6 und 10 mm betragen. Bevorzugt beträgt dieser Durchmesser etwa zwischen 8 und 9 mm. Die Düsenkörper weisen wiederum einen Durchmesser auf, der jeweils kleiner als der Durchmesser der entsprechenden Durchgangsöffnung ist. Dieser kann beispielsweise zwischen 1 und 15 mm, zwischen 3,5 und 13 mm oder zwischen 5,5 und 9 mm betragen. Der Durchmesser eines Düsenkörpers beträgt bevorzugt etwa 7,5 bis 8,5 mm. Beispielsweise hat die Durchgangsöffnung einen Durchmesser von 8,4 mm und der Düsenkörper einen Durchmesser von 8 mm. In der ersten Verteilerplatte können mehr als 50 oder mehr als 80, bevorzugt zwischen 90 und 110 Ringspalte vorgesehen sein. Der Einspritzkopf kann dieselbe Anzahl an Düsenkörpern aufweisen.

Jeder Ringspalt kann das Zusammenfügen von Verteilerplatte, Düsenkörper und Grundplatte erleichtern, da der entsprechende Düsenkörper einfacher mit der zugehörigen Durchgangsöffnung in Eingriff gebracht werden kann. Eine Innenumfangsfläche der Durchgangsöffnung kann dabei dazu eingerichtet sein, den zugehörigen Düsenkörper zu führen.

Damit ist die erste Verteilerplatte so ausgestaltet, dass die erste Treibstoffkomponente entlang eines Teils der Oberfläche der Düsenkörper in Richtung der Brennkammer strömen kann, während sie die erste Verteilerplatte durchströmt. Auf diese Weise wird die Strömung der ersten Treibstoffkomponente besser geführt und der Strömungswiderstand reduziert. Alternativ können die Düsenkörper einstückig, beispielsweise aus einem Stück Werkstoff, mit der ersten Verteilerplatte ausgebildet sein, sodass die erste Verteilerplatte an eine Außenumfangsfläche des jeweiligen Düsenkörpers angrenzt. Insofern können die Düsenkörper und die erste Verteilerplatte so ausgebildet sein, dass zwischen ihnen optional über die gesamte Stärke der ersten Verteilerplatte kein Spalt vorgesehen ist.

Außerdem ist es denkbar, dass die Durchgangsöffnungen ein oder mehrere Löcher umfassen. Beispielsweise kann die Grundform des einen oder der mehreren Löcher kreisförmig oder elliptisch sein. Alternativ oder zusätzlich können die Durchgangsöffnungen einen oder mehrere Schlitze umfassen. Beispielsweise kann jeder der Schlitze eine dreieckige, quadratische, rechteckige oder polygonale und Form aufweisen. Die Durchgangsöffnungen / die Löcher / die Schlitze sind vorzugsweise dazu eingerichtet, die erste Treibstoffkomponente von einer der Brennkammer abgewandten Seite der ersten Verteilerplatte durch die erste Verteilerplatte hindurch zu einer der Brennkammer zugewandten Seite der ersten Verteilerplatte zu leiten. Die Löcher/Schlitze können dazu vorgesehen sein, die erste Treibstoffkomponente zu filtern. Sie können beispielsweise durch Startlocherodieren gebildet werden. Ferner können die Löcher als (Zylinder-) Bohrungen ausgestaltet und/oder separat/beabstandet voneinander und/oder von den Düsenkörpern angeordnet sein. Der Durchmesser der Löcher kann geringer als der Durchmesser der Düsenkörper sein. Insbesondere kann der Durchmesser zwischen 1% und 30 % oder zwischen 4 % und 20 % oder zwischen 8 % und 12 % des Durchmessers des Düsenkörpers in einer parallel zur ersten Verteilerplatte verlaufenden Ebene betragen.

Ferner kann eine Achse der Löcher/Schlitze im Wesentlichen parallel zur Längsachse der Düsenkörper und/oder senkrecht zur ersten Verteilerplatte verlaufen. Der Abstand zwischen den Achsen der Löcher kann größer als der Durchmesser der Löcher in einer Ebene senkrecht zu den Achsen sein. Im Bereich um jeden der Düsenkörper können mehr als 5 oder mehr als 10 oder mehr als 15 oder mehr als 20 Löcher/Schlitze angeordnet sein. Die Höhe des Ringspaltes, d.h. der maximale Abstand zwischen Düsenkörper und Verteilerplattenmaterial, kann im montierten Zustand höchstens so groß wie der Durchmesser eines oder jedes Lochs sein. Dadurch können die Löcher die erste Treibstoffkomponente besser filtern.

In einer Ausgestaltung des Einspritzkopfes sind einige oder alle Durchgangsöffnungen entlang einer geschlossenen Kurve um je einen Düsenkörper herum angeordnet. Die Kurve kann beispielsweise die Form eines Kreises, einer Ellipse, eines Drei-, Vier- oder Mehr-Ecks oder eines Rechtecks aufweisen. Außerdem kann die Kurve so angeordnet sein, dass der jeweilige Düsenkörper durch die Mitte (z.B. der geometrische Schwerpunkt) der Kurve verläuft. Beispielsweise sind einige oder alle Durchgangsöffnungen entlang mehrerer konzentrischer Kreise angeordnet. Dabei kann eine Mittenlängsachse des jeweiligen Düsenkörpers durch die Kreismitte verlaufen. Entlang der geschlossenen Kurve können die Durchgangsöffnungen mit gleichem Abstand zueinander angeordnet sein. Ferner können die Bereiche so angeordnet sein, dass sie einander nicht überlappen. Durch diese Anordnung der Durchgangsöffnungen lässt sich eine homogenere Verteilung der ersten Treibstoffkomponente realisieren.

In einer Variante ragt ein oder ragen mehrere der Düsenkörper jeweils in eine der Auslassöffnungen hinein und/oder kann/können die Auslassöffnung durchsetzen. Unabhängig davon, ob ein Düsenkörper in eine Auslassöffnung hineinragt, korrespondieren der Düsenkörper und die Auslassöffnung vorzugsweise miteinander. Beispielsweise sind der Düsenkörper und die Auslassöffnung fluchtend oder koaxial ausgerichtet. Zwischen einem radial inneren Rand jeder Auslassöffnung und der Außenumfangsfläche des zugehörigen Düsenkörpers kann ein weiterer Ringspalt vorgesehen sein, durch den die erste Treibstoffkomponente den Einspritzkopf verlassen kann. Außerdem kann um mindestens eine der Auslassöffnungen ein Wulst ausgebildet sein, der sich beispielsweise von der Frontplatte in Richtung der Grundplatte erhebt. Der Wulst kann dabei entlang einer Kurve, insbesondere entlang einer Kreislinie, entlang des Randes der jeweiligen Auslassöffnung verlaufen. Ein der ersten Verteilerplatte zugewandter Rand des Wulstes kann gegenüber der ersten Verteilerplatte beabstandet sein.

In einer Weiterbildung umfasst der Einspritzkopf einen ersten Gehäuseabschnitt, der einen ersten Teil und einen zweiten Teil aufweisen kann. Dabei kann im ersten Teil ein erster Treibstoffzulauf für die erste Treibstoffkomponente ausgebildet sein. Der erste Teil, die erste Verteilerplatte und die Grundplatte können dabei zusammen eine erste Treibstoffkammer für die erste Treibstoffkomponente begrenzen oder definieren. Der erste Gehäuseabschnitt kann abschnittsweise als Zylindermantel geformt sein und kann entlang eines äußeren Randes der Grundplatte und/oder der ersten Verteilerplatte verlaufen. Dabei kann sich der Zylindermantel im Wesentlichen senkrecht zur Grundplatte erstrecken. Der erste Treibstoffzulauf ist beispielsweise so ausgerichtet, dass die erste Treibstoffkomponente entlang der der Brennkammer abgewandten Oberfläche der ersten Verteilerplatte in die erste Treibstoffkammer einströmt. Der erste Treibstoffzulauf kann trichterförmig ausgebildet sein, wobei sein Querschnitt senkrecht zur Strömungsrichtung der ersten Treibstoffkomponente an seinem den Düsenkörpern zugewandten Ende größer ist als sein Querschnitt senkrecht zur Strömungsrichtung der ersten Treibstoffkomponente an seinem den Düsenkörpern abgewandten Ende. Damit kann die erste Treibstoffkomponente mit relativ geringem Widerstand in die erste Treibstoffkammer eingeleitet werden.

Ferner kann der Einspritzkopf einen zweiten Gehäuseabschnitt umfassen, der sich senkrecht zur Frontplatte erstreckt. Dabei können der zweite Gehäuseabschnitt, die Frontplatte und die erste Verteilerplatte eine zweite Treibstoffkammer für die erste Treibstoffkomponente begrenzen oder definieren. Auch der zweite Gehäuseabschnitt kann als Zylindermantel geformt sein und kann sich entlang eines radial äußeren Randes der Frontplatte erstrecken. Insoweit ist der zweite Gehäuseabschnitt als sich senkrecht zur Frontplatte erstreckender Flansch ausgestaltet. Der zweite Gehäuseabschnitt kann dabei fluiddicht mit dem ersten Gehäuseabschnitt verbunden sein.

Außerdem hält der zweite Gehäuseabschnitt zusammen mit dem ersten Gehäuseabschnitt die erste Verteilerplatte. Hierzu weist der erste Gehäuseabschnitt im Bereich seiner dem zweiten Gehäuseabschnitt benachbarten Kante und/oder der zweite Gehäuseabschnitt im Bereich seiner dem ersten Gehäuseabschnitt benachbarten Kante eine Nut an seiner Innenumfangsfläche auf, in die der radial äußere Rand der ersten Verteilerplatte eingreift, um dort zwischen dem ersten Gehäuseabschnitt und dem zweiten Gehäuseabschnitt gehalten, insbesondere eingespannt, zu sein. Die Düsenkörper durchsetzen vorteilhafterweise sowohl die erste als auch die zweite Kammer.

In einer weiteren Ausgestaltung umfasst der Einspritzkopf eine Rückplatte und/oder einen dritten Gehäuseabschnitt. Der dritte Gehäuseabschnitt kann einstückig mit der Rückplatte hergestellt sein. Die Rückplatte ist vorzugsweise auf einer der Frontplatte entgegengesetzten Seite der Grundplatte von der Grundplatte beabstandet angeordnet. Sie kann auf ihrer der Grundplatte zugewandten Seite eine durchgängig plane Oberfläche aufweisen, deren Fläche etwa 80 bis 120 % der Fläche der der Brennkammer abgewandten Oberfläche der Grundplatte beträgt. Außerdem kann sie im Wesentlichen parallel zur Grundplatte ausgerichtet sein. Der dritte Gehäuseabschnitt kann auf einer dem zweiten Gehäuseabschnitt entgegengesetzten Seite des ersten Gehäuseabschnitts angeordnet sein. Er kann sich, beispielsweise senkrecht, von der Rückplatte in Richtung des ersten Gehäuseabschnitts erstrecken und als Zylindermantel geformt sein. Vorzugsweise verlaufen die Außenumfangsflächen des ersten und zweiten oder zweiten und dritten Gehäuseabschnitts bündig zueinander. Auf diese Weise lassen sich die Gehäuseabschnitte schnell und einfach miteinander verbinden.

Der dritte Gehäuseabschnitt, die Rückplatte und/oder eine zwischen der Rückplatte und der Grundplatte angeordnete zweite Verteilerplatte können eine dritte Treibstoffkammer für die zweite Treibstoffkomponente begrenzen/definieren. Der dritte Gehäuseabschnitt kann dazu fluiddicht mit dem ersten Gehäuseabschnitt, insbesondere mit dem zweiten Teil des ersten Gehäuseabschnitts, verbunden sein. Außerdem hält der dritte Gehäuseabschnitt zusammen mit dem ersten Gehäuseabschnitt, insbesondere mit dem zweiten Teil des ersten Gehäuseabschnitts, die zweite Verteilerplatte. Hierzu weist der erste Gehäuseabschnitt im Bereich seiner dem dritten Gehäuseabschnitt benachbarten Kante und/oder der dritte Gehäuseabschnitt im Bereich seiner dem ersten Gehäuseabschnitt benachbarten Kante eine Nut an seiner Innenumfangsfläche auf, in die der radial äußere Rand der zweiten Verteilerplatte eingreift, um dort zwischen dem ersten Gehäuseabschnitt und dem dritten Gehäuseabschnitt gehalten, insbesondere eingespannt, zu sein. Die zweite Verteilerplatte kann ein Volumen zwischen der Grundplatte und der Rückplatte in zwei Teilvolumina aufteilen.

Vorteilhafterweise ist ein zweiter Treibstoffzulauf für die zweite Treibstoffkomponente im dritten Gehäuseabschnitt ausgebildet. Der zweite Treibstoffzulauf ist im Wesentlichen wie der erste Treibstoffzulauf geformt und mündet über eine Öffnung im dritten Gehäuseabschnitt in die dritte Treibstoffkammer. Insbesondere kann auch der zweite Treibstoffzulauf trichterförmig mit vergrößertem Querschnitt am der dritten Treibstoffkammer zugewandten Ende ausgebildet sein. Zwischen der zweiten Verteilerplatte und der Grundplatte ist eine vierte Treibstoffkammer ausgebildet, die optional durch den zweiten Teil des ersten Gehäuseabschnitts begrenzt sein kann. Die zweite Verteilerplatte weist eine oder mehrere Durchgangslöcher auf, die dazu eingerichtet sind, die zweite Treibstoffkomponente aus der dritten Treibstoffkammer in die vierte Treibstoffkammer zu leiten und dadurch zu verteilen.

Die Düsenkörper sind vorzugsweise zylinderförmig ausgestaltet und können einstückig mit der Grundplatte ausgebildet sein. Dabei können sie die Grundplatte optional durchsetzen. Beispielsweise weisen die Düsenkörper einen Treibstoffeinlass für die zweite Treibstoffkomponente auf, der an einer der Brennkammer abgewandten Oberfläche der Grundplatte angeordnet ist. Dabei können zumindest einige der, beispielsweise alle, Durchgangslöcher der zweiten Verteilerplatte mit den Treibstoffeinlässen der Düsenkörper korrespondieren, beispielsweise mit den Treibstoffeinlässen der Düsenkörper fluchtend angeordnet sein. Insofern ist der Treibstoffeinlass eines oder mehrerer Düsenkörper/s fluidisch über die vierte Treibstoffkammer, die zweite Verteilerplatte und die dritte Treibstoffkammer mit dem zweiten Treibstoffzulauf verbunden.

Der Einspritzkopf kann einstückig hergestellt sein. Beliebige Komponenten des Einspritzkopfes, insbesondere sämtliche Komponenten des Einspritzkopfes, können dabei aus einem einzigen Stück eines Werkstoffes, beispielsweise durch Gießen oder additive Fertigungsmethoden wie 3D-Druck (ALM - additive layer manufacturing) hergestellt sein.

Ferner ist es denkbar, dass der erste Gehäuseabschnitt einstückig, insbesondere aus einem Stück Werkstoff (z.B. aus einem Guss), mit der Grundplattenanordnung, der Grundplatte und/oder den Düsenkörpern hergestellt wird. Auf gleiche Weise kann der dritte Gehäuseabschnitt einstückig / aus einem Stück Werkstoff mit der Rückplatte und/oder der zweite Gehäuseabschnitt einstückig / aus einem Stück Werkstoff mit der Frontplatte hergestellt sein. In diesem Fall werden der erste, zweite und dritte Gehäuseabschnitt vorzugsweise über Schweiß- oder Lötnähte miteinander verbunden. Insbesondere kann der erste Gehäuseabschnitt zusammen mit den Düsenkörpern durch Fräsen oder 3D-Druck hergestellt werden. Allgemein kann die Herstellung aus einem einzigen Stück eines Werkstoffs beispielsweise durch Fräsen oder 3D-Druck erfolgen.

Auch ist es denkbar, dass wobei die Frontplatte und die erste Verteilerplatte einstückig hergestellt sind. Alternativ oder zusätzlich können auch die Frontplatte (12), die erste Verteilerplatte und der zweite Gehäuseabschnitt einstückig hergestellt sein. Beispielsweise kann der zweite Gehäuseabschnitt aus einem Stück Werkstoff hergestellt sein, wobei die zweite Treibstoffkammer zwischen der Frontplatte und der ersten Verteilerplatte durch Fräsen, zum Beispiel mit einem T-Nut-Fräser, erzeugt wird, oder der zweite Gehäuseabschnitt mit Frontplatte und erster Verteilerplatte aus einem Guss oder mittels 3D-Druck-Verfahren hergestellt wird.

Gemäß einem Aspekt weist ein Triebwerk, insbesondere ein Raketentriebwerk, einen vorstehend im Detail beschriebenen Einspritzkopf sowie eine Brennkammer auf. Die Brennkammer ist vorzugsweise benachbart zur Frontplatte angeordnet, sodass sowohl die erste als auch die zweite Treibstoffkomponente die Auslassöffnungen an die Brennkammer abgegeben werden. In der Brennkammer können die erste Treibstoffkomponente und die zweite Treibstoffkomponente miteinander reagieren, um Schub zu erzeugen. Darüber hinaus kann das Triebwerk eine Düse aufweisen, über die die Endprodukte der miteinander reagierten ersten und zweiten Treibstoffkomponente das Triebwerk verlassen.

Gemäß einem weiteren Aspekt umfasst eine Rakete einen ebenfalls vorstehend detailliert beschriebenen Einspritzkopf oder ein oben beschriebenes Triebwerk.

Gemäß einem weiteren Aspekt umfasst ein Verfahren zum Herstellen eines Einspritzkopf für ein Triebwerk die Schritte:
- Bereitstellen einer eine Brennkammer des Triebwerks begrenzenden Frontplatte mit Auslassöffnungen für eine erste Treibstoffkomponente,
- Anordnen einer Grundplattenanordnung auf einer der Brennkammer abgewandten Seite der Frontplatte, wobei die Grundplattenanordnung eine Grundplatte und sich von der Grundplatte in Richtung der Brennkammer erstreckende Düsenkörper für eine zweite Treibstoffkomponente aufweist, wobei die Düsenkörper mit den Auslassöffnungen korrespondieren,
- Bereitstellen einer ersten Verteilerplatte zwischen der Frontplatte und der Grundplatte, so dass die Düsenkörper die erste Verteilerplatte durchsetzen,
- Ausbilden jeweils einer oder mehrerer Durchgangsöffnungen in Bereichen der ersten Verteilerplatte um die die erste Verteilerplatte durchsetzenden Düsenkörper,
- Bereitstellen eines ersten Gehäuseabschnitts mit einem ersten Teil und einem zweiten Teil, wobei im ersten Teil ein erster Treibstoffzulauf für die erste Treibstoffkomponente ausgebildet ist, und wobei der erste Teil, die erste Verteilerplatte und die Grundplatte eine erste Treibstoffkammer für die erste Treibstoffkomponente begrenzen,
- Bereitstellen eines zweiten Gehäuseabschnitts, der sich senkrecht zur Frontplatte erstreckt, wobei der zweite Gehäuseabschnitt, die Frontplatte und die erste Verteilerplatte eine zweite Treibstoffkammer für die erste Treibstoffkomponente begrenzen, und
- Anordnen eines dritten Gehäuseabschnitts auf einer dem zweiten Gehäuseabschnitt entgegengesetzten Seite des ersten Gehäuseabschnitts, wobei in dem dritten Gehäuseabschnitt ein zweiter Treibstoffzulauf für die zweite Treibstoffkomponente ausgebildet ist.

Gemäß einer Variante des Verfahrens kann das Bereitstellen der Frontplatte und der ersten Verteilerplatte ein Bereitstellen eines einzelnen Stück Werkstoffs und Fräsen der Treibstoffkammer für die erste Treibstoffkomponente aus dem Stück Werkstoff umfassen. Dabei kann das Fräsen beispielsweise durch einen T-Nut-Fräser durchgeführt werden.

Ferner ist es denkbar, dass die Frontplatte mit Rippen versehen ist, also beim Fräsen Stege zwischen Frontplatte und erster Verteilerplatte stehen bleiben. Dabei kann die zweite Treibstoffkammer durch eine Vielzahl von gefrästen Taschen, die untereinander fluidisch kommunizieren können, gebildet werden. Durch Verringerung des Fräsradius können aber auch einzelne, durch die Rippen/Stege voneinander getrennte Taschen, in denen die Düsenkörper die zweite Treibstoffkammer durchsetzen, gebildet werden. Damit wird die zweite Treibstoffkammer in Form einer Vielzahl von gefrästen Taschen, die untereinander nicht fluidisch kommunizieren können, gebildet.

Bevorzugte Ausführungsbeispiele eines Einspritzkopfes für ein Triebwerk werden nun genauer unter Bezugnahme auf die beigefügten schematischen Zeichnungen erläutert, wobei
- Figur 1: eine erste Ausgestaltung eines aufgeschnittenen Einspritzkopfes in einer perspektivischen Ansicht mit Blickrichtung von schräg oberhalb der Brennkammer zeigt;
- Figur 2: den Einspritzkopf aus Figur 1 im Bereich der ersten Verteilerplatte in einer perspektivischen Detailansicht zeigt;
- Figur 3: den Einspritzkopf aus Figur 1 in einer Seitenansicht zeigt;
- Figur 4: den Einspritzkopf aus Figur 1 im Bereich eines Düsenkörpers in einer Querschnittsansicht zeigt;
- Figur 5: den Einspritzkopf aus Figur 1 zerlegt in einer perspektivischen Ansicht von schräg oberhalb der Brennkammer zeigt;
- Figur 6: den Einspritzkopf aus Figur 1 zerlegt in einer perspektivischen Ansicht von schräg unterhalb der Frontplatte zeigt;
- Figuren 7a und 7b: die Rückplatte, den dritten Gehäuseabschnitt und den zweiten Treibstoffzulauf des Einspritzkopfes aus Figur 1 zeigen;
- Figur 7c: einen zweiten Treibstoffzulauf einer zweiten Ausgestaltung eines Einspritzkopfes in einer perspektivischen Ansicht zeigt;
- Figuren 8a und 8b: die zweite Verteilerplatte des Einspritzkopfes aus Figur 1 in einer perspektivischen Ansicht und einer Draufsicht zeigen;
- Figuren 9a und 9b: den ersten Gehäuseabschnitt, die Grundplatte, die Düsenkörper und den ersten Treibstoffzulauf des Einspritzkopfes aus Figur 1 zeigen;
- Figur 9c: einen ersten Treibstoffzulauf der zweiten Ausgestaltung des Einspritzkopfes in einer perspektivischen Ansicht zeigt;
- Figuren 10a-10c: die erste Verteilerplatte des Einspritzkopfes aus Figur 1 in verschiedenen Ansichten zeigen;
- Figur 10d: einen Abschnitt einer ersten Verteilerplatte einer dritten Ausgestaltung eines Einspritzkopfes zeigt; und.
- Figuren 11a-11c: die Frontplatte des Einspritzkopfes aus Figur 1 in verschiedenen perspektivischen Ansichten zeigen.

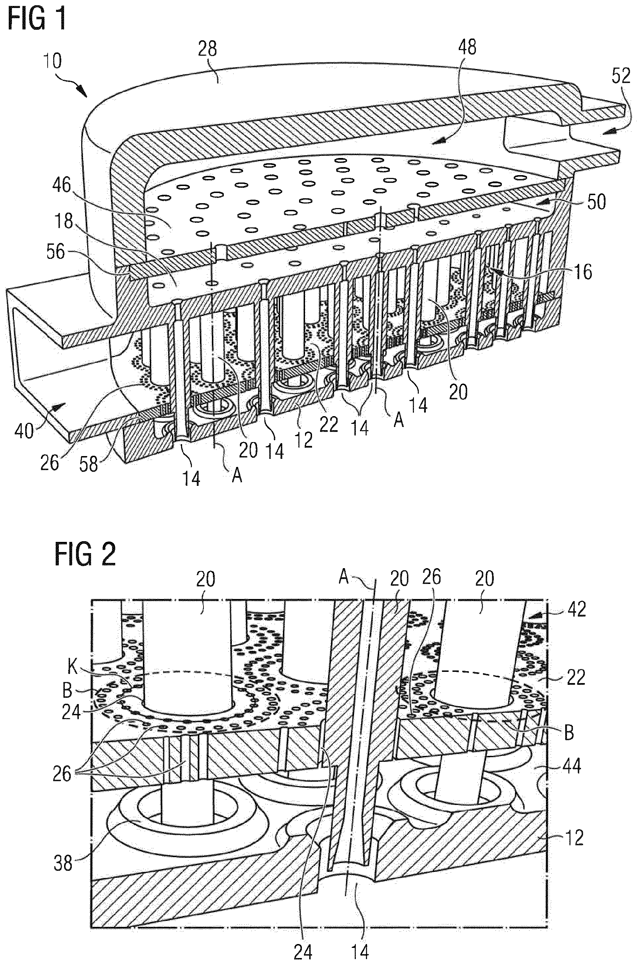

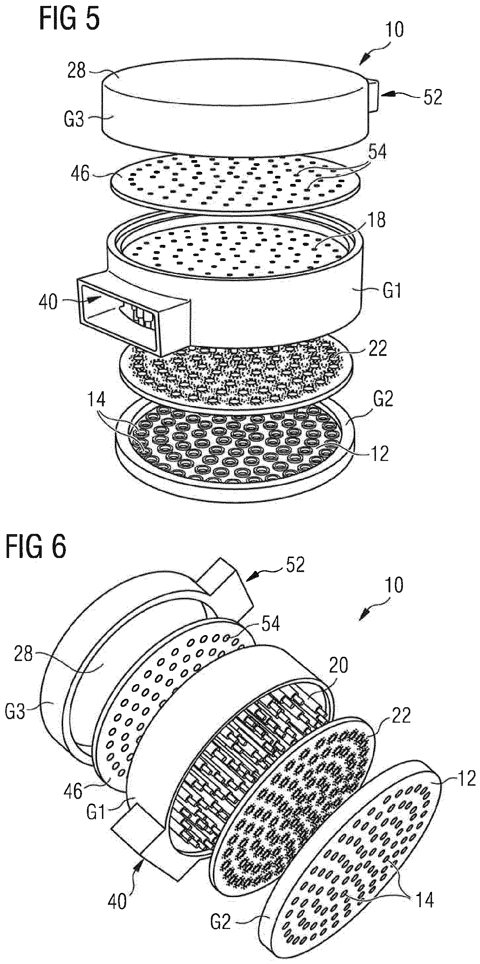

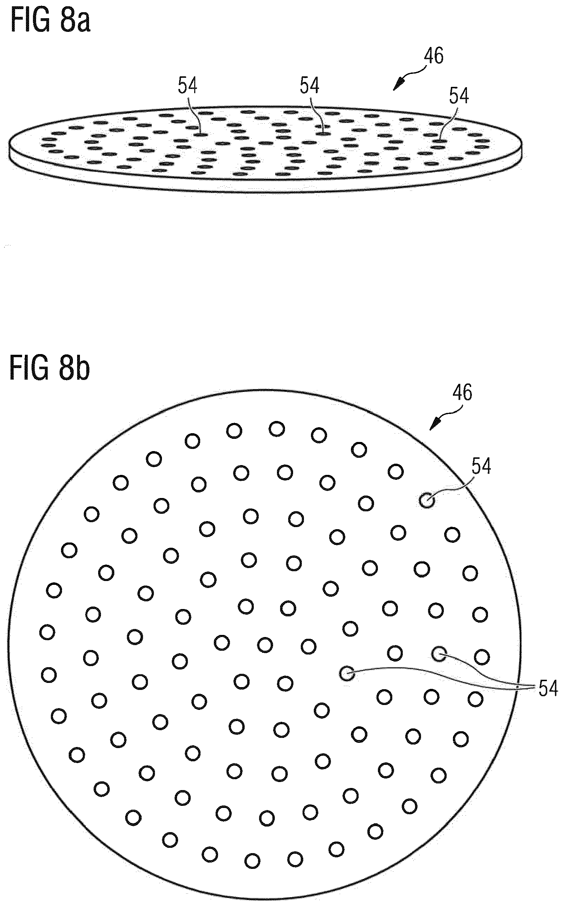

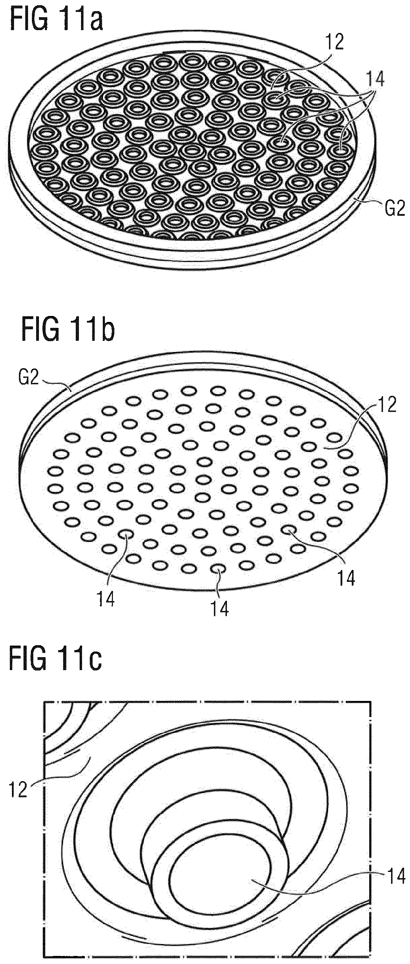

Die Figuren 1 bis 6, 7a, 7b, 8a, 8b, 9a, 9b, 10a bis 10c und 11a bis 11c zeigen eine erste Ausgestaltung eines Einspritzkopfes 10 für ein Triebwerk, insbesondere für ein Raketentriebwerk. Der Einspritzkopf 10 umfasst eine eine nicht gezeigte Brennkammer des Triebwerks begrenzende Frontplatte 12 mit Auslassöffnungen 14 für eine erste Treibstoffkomponente und eine auf einer der Brennkammer abgewandten Seite der Frontplatte 12 angeordnete Grundplattenanordnung 16, die eine Grundplatte 18 und sich von der Grundplatte 18 in Richtung der Brennkammer erstreckende Düsenkörper 20 für eine zweite Treibstoffkomponente aufweist. Wie insbesondere aus den Figuren 1 und 2 ersichtlich ist, korrespondieren oder fluchten die Düsenkörper 20 mit den Auslassöffnungen 14. Zwischen der Frontplatte 12 und der Grundplatte 18 ist eine erste Verteilerplatte 22 angeordnet. Die Düsenkörper 20 durchsetzen die erste Verteilerplatte 22. In Bereichen B der ersten Verteilerplatte 22 um die die erste Verteilerplatte 22 durchsetzenden Düsenkörper 20 sind jeweils eine oder mehrere Durchgangsöffnungen ausgebildet. Es können mindestens fünf oder mindestens 10 oder mindestens 20 Durchgangsöffnungen pro durchsetzenden Düsenkörper 20 vorgesehen sein. In der ersten Verteilerplatte 22 können insgesamt mindestens 50 oder mindestens 200 oder mindestens 400 oder mindestens 1000 oder mindestens 2000 oder mindestens 4000 Durchgangsöffnungen vorgesehen sein.

Die Durchgangsöffnungen umfassen einen Ringspalt 24 zwischen der ersten Verteilerplatte 22 und einem zugehörigen Düsenkörper 20, wobei sich der Ringspalt 24 in dem dargestellten Einspritzkopf 10 entlang des gesamten Umfangs des Düsenkörpers 20 erstreckt. Darüber hinaus umfassen die Durchgangsöffnungen mehr als 20 Löcher 26, insbesondere mehr als 20 mal so viele Löcher 26 wie Düsenkörper 20. Der Durchmesser der Löcher 26 ist geringer als der Durchmesser der Düsenkörper 20. Die Löcher 26 sind beabstandet von den Düsenkörpern 20 angeordnet und erstrecken sich ebenso wie der Ringspalt 24 durch die Verteilerplatte 22 parallel zu einer Achse A der Düsenkörper 20, entlang derer die zweite Treibstoffkomponente die Düsenkörper 20 durchströmt. Die Achse A verläuft senkrecht zur ersten Verteilerplatte 22, zur Grundplatte 18 und zur Frontplatte 12 sowie zur unten näher erläuterten Rückplatte 28. Die Höhe des Ringspaltes 24, d.h. der maximale Abstand zwischen Düsenkörper und Verteilerplattenmaterial, ist hier geringer als der Durchmesser jedes Lochs 26.

Die Löcher 26 sind entlang geschlossener Kurven K, hier beispielsweise in Form von Kreislinien, um den zugehörigen Düsenkörper 20 angeordnet. Dabei ist der Durchmesser der Löcher 26 so gewählt, dass sie voneinander beabstandet sind, d.h., dass zwischen ihnen Verteilerplattenmaterial der ersten Verteilerplatte 22 vorliegt. Die Anzahl der entlang einer geschlossenen Kurve K angeordneten Löcher 26 beträgt mindestens 3, 5 oder 9, im vorliegenden Fall beispielsweise mehr als 20. Der Durchmesser eines Lochs 26 ist geringer als 30 % des Durchmessers D des Düsenkörpers 20 auf Höhe der Grundplatte 18 und/oder der ersten Verteilerplatte 22. Die Löcher 26 sind als Lochbohrungen ausgeführt und können parallel zueinander verlaufen. Außerdem sind die Löcher 26 in gleichen Abständen entlang der Kurven K angeordnet. Alternativ können die Löcher 26 statt entlang geschlossener Kurven K zufällig über die Verteilerplatte verteilt angeordnet sein.

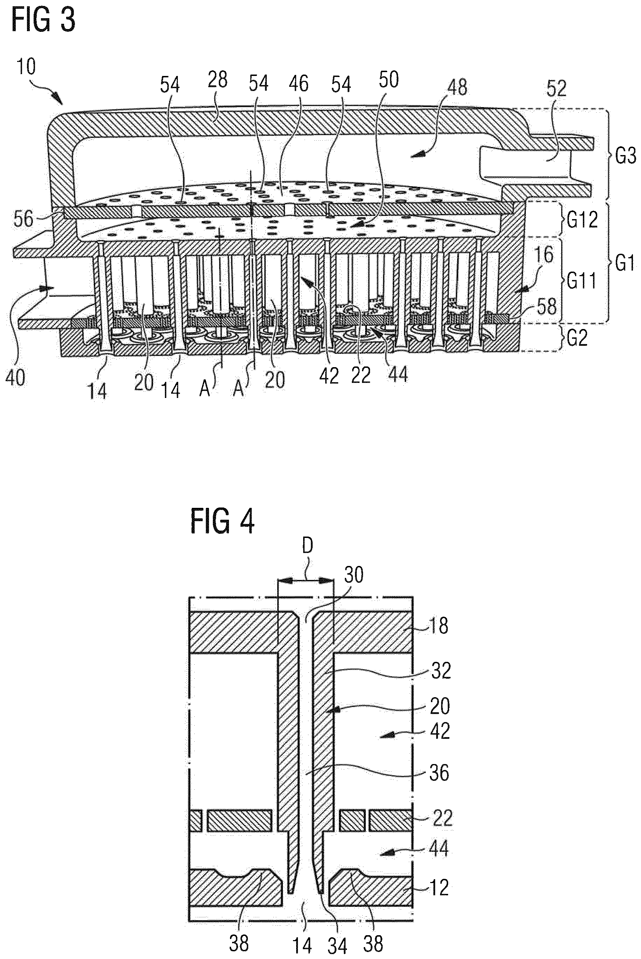

Die Figuren 2 und 4 zeigen im Detail, dass jeder Düsenkörper 20 in eine Auslassöffnung 14 hineinragt. Der Düsenkörper 20 ist zylinderförmig ausgebildet und weist einen Treibstoffeinlass 30 an einem der Brennkammer abgewandten Ende eines Hauptschafts 32 sowie eine an den Hauptschaft 32 brennkammerseitig anschließenden Düsenauslass 34 auf. Durch den Hauptschaft 32 und den Düsenauslass 34 verläuft ein im Hauptschaft 32 einen konstanten Durchmesser aufweisender, sich im Düsenauslass 32 erweiternder Treibstoffkanal 36. Während der Außendurchmesser des Hauptschafts 32 den Durchmesser D aufweist, hat der Düsenauslass 34 einen Außendurchmesser, der geringer als der Durchmesser D ist. Der Hauptschaft 32 steht in Eingriff mit der ersten Verteilerplatte 22.

An der Frontplatte 12 ist ringförmig um jede Auslassöffnung ein Wulst 38 ausgebildet, der sich von der Frontplatte 12 in Richtung der Grundplatte 18 und der Verteilerplatte 22 erhebt. Der Wulst 38 verläuft innerhalb eines Bereiches, der dem auf die Frontplatte 12 projizierten Bereich B entspricht. Er erhebt sich von einer der Brennkammer abgewandten Oberfläche der Frontplatte 12 um weniger als den, insbesondere weniger als die Hälfte des, Abstand/es zwischen der Frontplatte 12 und der ersten Verteilerplatte 22.

Ferner umfasst der Einspritzkopf 10 einen ersten Gehäuseabschnitt G1 mit einem ersten Teil G11 und einem zweiten Teil G12, einen zweiten Gehäuseabschnitt G2 und einen dritten Gehäuseabschnitt G3. Am ersten Teil G11 ist ein erster Treibstoffzulauf 40 für die erste Treibstoffkomponente angeordnet. Der erste Teil G11, die erste Verteilerplatte 22 und die Grundplatte 18 begrenzen/definieren eine erste Treibstoffkammer 42 für die erste Treibstoffkomponente. Der zweite Gehäuseabschnitt G2, die Frontplatte 12 und die erste Verteilerplatte 22 begrenzen/definieren eine zweite Treibstoffkammer 44 für die erste Treibstoffkomponente. Der dritte Gehäuseabschnitt G3, die Rückplatte 28 und eine zwischen der Rückplatte 28 und der Grundplatte 18 angeordnete zweite Verteilerplatte 46 begrenzen/definieren eine dritte Treibstoffkammer 48 für die zweite Treibstoffkomponente. Der zweite Teil G12 begrenzt/definiert zusammen mit der Grundplatte 18 und der zweiten Verteilerplatte 46 eine vierte Treibstoffkammer 50 für die zweite Treibstoffkomponente. Alle drei Gehäuseabschnitte G1-G3 können sich jeweils senkrecht zu der Frontplatte 12, der Grundplatte 18, der ersten Verteilerplatte 22, der zweiten Verteilerplatte 46 und der Rückplatte 28 und/oder parallel zueinander erstrecken.

Der dritte Gehäuseabschnitt G3 ist auf einer dem zweiten Gehäuseabschnitt G2 entgegengesetzten Seite des ersten Gehäuseabschnitts G1 angeordnet. Am dritten Gehäuseabschnitt G3 ist ein zweiter Treibstoffzulauf 52 ausgebildet, der dazu eingerichtet ist, die zweite Treibstoffkomponente in die dritte Treibstoffkammer 48 einzuleiten. Die zweite Verteilerplatte 46 ist mit Durchgangslöchern 54 versehen, über die die dritte Treibstoffkammer 48 mit der vierten Treibstoffkammer 50 in Fluidverbindung steht. Mittels der Durchgangslöcher 54 kann die zweite Verteilerplatte 46 die zweite Treibstoffkomponente homogen über die Treibstoffeinlässe 30 verteilen. Die zweite Treibstoffkomponente wird sodann mittels der in den Düsenkörpern 20 ausgebildeten Treibstoffkanäle 36 zu den Auslassöffnungen 14 der Frontplatte 12 geleitet. Insofern ist der Treibstoffeinlass 30 jedes Düsenkörpers 20 fluidisch mit der dritten und der vierten Treibstoffkammer 48, 50 sowie dem zweiten Treibstoffzulauf 52 verbunden. Im zweiten Treibstoffzulauf 52 ist die Strömungsrichtung der zweiten Treibstoffkomponente im Wesentlichen parallel zur der Brennkammer abgewandten Oberfläche der zweiten Verteilerplatte 46 ausgerichtet, wohingegen die Strömungsrichtung der zweiten Treibstoffkomponente in den Treibstoffkanälen 36 im Wesentlichen senkrecht zur der Brennkammer abgewandten Oberfläche zweiten Verteilerplatte 46 ausgerichtet ist.

Die erste Treibstoffkomponente wird durch den ersten Treibstoffzulauf 40 in die erste Treibstoffkammer 42 geleitet. Im ersten Treibstoffzulauf 40 verläuft die Strömungsrichtung der ersten Treibstoffkomponente im Wesentlichen parallel zur ersten Verteilerplatte 22 und kann antiparallel zur Strömungsrichtung der zweiten Treibstoffkomponente im zweiten Treibstoffzulauf 52 verlaufen. In den Durchgangsöffnungen der ersten Verteilerplatte 22 verläuft die Strömungsrichtung der ersten Treibstoffkomponente im Wesentlichen parallel zur Strömungsrichtung der zweiten Treibstoffkomponente in den Treibstoffkanälen 36. Dadurch können die beiden Treibstoffkomponenten an den Auslassöffnungen 14 zusammengeführt werden, um sich effektiv zu vermischen. Der erste Treibstoffzulauf 40 und der zweite Treibstoffzulauf 52 können im Wesentlichen dieselbe Geometrie aufweisen. In der hier beschriebenen Ausgestaltung sind die Treibstoffzuläufe 40, 52 im Wesentlichen zylinderförmig ausgebildet und weisen jeweils in einer zur Strömungsrichtung senkrechten Ebene einen im Wesentlichen rechteckigen (alternativ elliptischen oder kreisförmigen) Querschnitt auf.

Die drei Gehäuseabschnitte G1 bis G3 sind einstückig mit der Frontplatte 12, der ersten Verteilerplatte 22, der Grundplatte 18, der zweiten Verteilerplatte 46 und der Rückplatte 28 ausgebildet. Insbesondere sind die Frontplatte 12 und der zweite Gehäuseabschnitt G2, die Grundplatte 18, die Düsenkörper 20 und der erste Treibstoffzulauf 40 sowie die Rückplatte 28, der dritte Gehäuseabschnitt G3 und der zweite Treibstoffzulauf 52 jeweils aus einem (einzigen) Stück Werkstoff hergestellt. Darüber hinaus sind die Verteilerplatten 22, 46 jeweils aus einem (einzigen) Stück Werkstoff hergestellt. Im Bereich einer Grenze zwischen dem ersten Gehäuseabschnitt G1 und dem zweiten Gehäuseabschnitt G2 sowie dem ersten Gehäuseabschnitt G1 und dem dritten Gehäuseabschnitt G3 sind Nuten 56, 58 ausgebildet, in denen die erste Verteilerplatte 22 bzw. die zweite Verteilerplatte 46 gehalten ist.

Zur Herstellung dieses Einspritzkopfes 10 wird zunächst die erste Verteilerplatte 22 in die erste Nut 58 eingelegt. Anschließend wird der erste Gehäuseabschnitt G1 auf den zweiten Gehäuseabschnitt G2 aufgelegt und mittels einer umlaufenden Schweiß- oder Lötnaht am zweiten Gehäuseabschnitt G2 befestigt. Sodann wird die zweite Verteilerplatte 46 in die Nut 56 eingelegt, der dritte Gehäuseabschnitt G3 auf den ersten Gehäuseabschnitt G1 aufgesetzt und wiederum mittels einer umlaufenden Schweiß- oder Lötnaht am ersten Gehäuseabschnitt G1 befestigt. Alternativ kann der Einspritzkopf einstückig mittels 3D Druck (ALM) hergestellt werden.

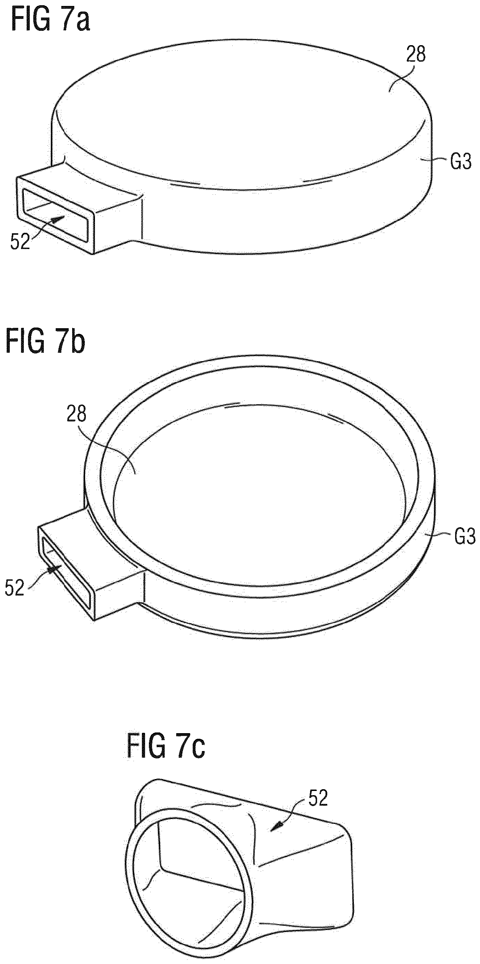

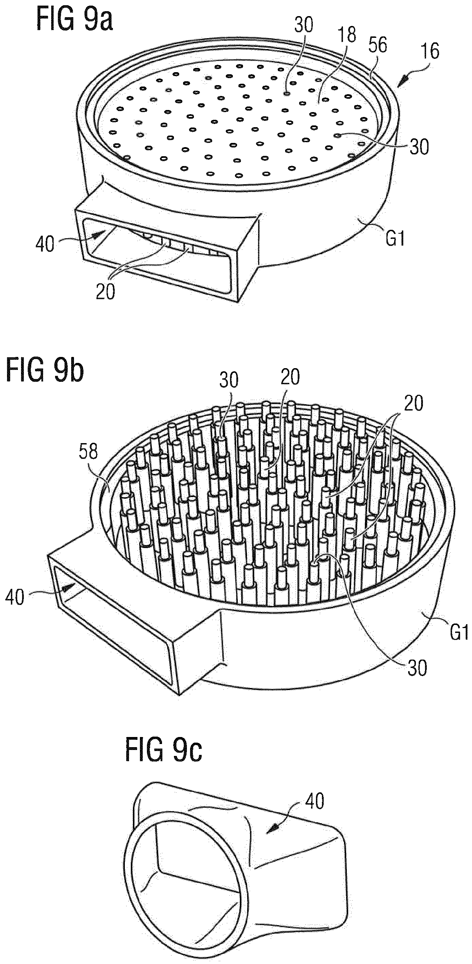

Die Figuren 7c und 9c zeigen Treibstoffzuläufe 40, 52 einer zweiten Ausgestaltung eines Einspritzkopfes 10. Diese Treibstoffzuläufe 40, 52 sind trichterförmig ausgebildet. Sie weisen auf einer der ersten bzw. dritten Treibstoffkammer 42, 48 abgewandten Seite in einer Ebene senkrecht zur Strömungsrichtung einen kreisförmigen Querschnitt auf. Alternativ oder zusätzlich dazu können die Treibstoffzuläufe 40, 52 auf einer der ersten bzw. dritten Treibstoffkammer 42, 48 zugewandten Seite in einer Ebene senkrecht zur Strömungsrichtung einen rechteckigen Querschnitt aufweisen. Optional ist die Fläche des rechteckigen Querschnitts größer als die Fläche des kreisförmigen Querschnitts. Darüber hinaus kann die zweite Ausgestaltung des Einspritzkopfes 10 alle Merkmale der ersten Ausgestaltung des Einspritzkopfes 10 aufweisen.

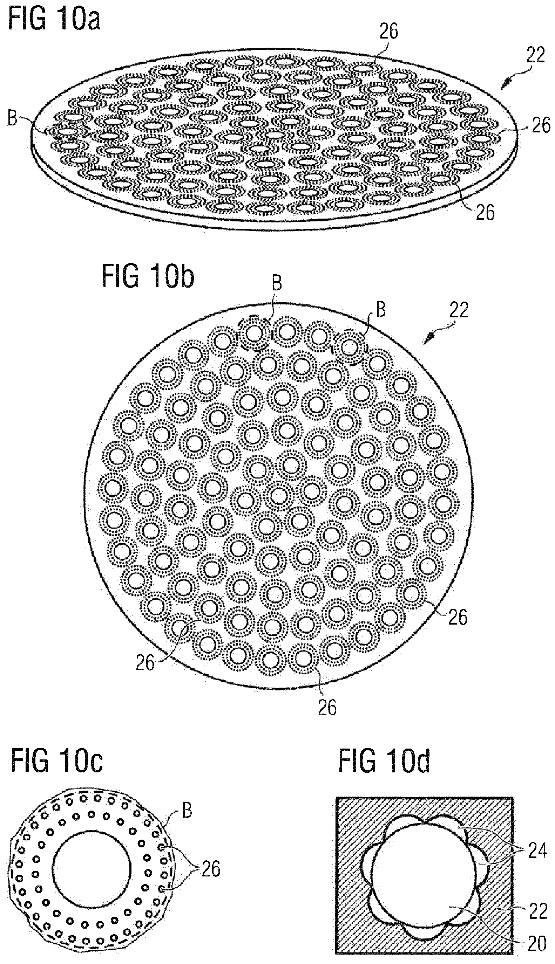

Die Figur 10d gezeigt einen Abschnitt einer ersten Verteilerplatte 22 einer dritten Ausgestaltung eines Einspritzkopfes 10 im Bereich des Düsenkörpers 20. Bei diesem Einspritzkopf 10 erstrecken sich die Ringspalte 24 nur abschnittsweise entlang des Umfangs des jeweiligen Düsenkörpers 20, so dass der Düsenkörper 20 Kontaktstellen zu der Verteilerplatte 22 aufweist, über die er von der Verteilerplatte 22 gestützt wird. Darüber hinaus kann der Einspritzkopf 10 aus Figur 10d alle Merkmale des Einspritzkopfes 10 aus den Figuren 1 bis 6, 7a, 7b, 8a, 8b, 9a, 9b, 10a bis 10c und 11a bis 11c oder des Einspritzkopfes 10 aus den Figuren 7c und 9c aufweisen.

## Patentansprüche

1. Einspritzkopf (10) für ein Triebwerk, umfassend
- eine eine Brennkammer des Triebwerks begrenzende Frontplatte (12) mit Auslassöffnungen (14) für eine erste Treibstoffkomponente,
- eine auf einer der Brennkammer abgewandten Seite der Frontplatte (12) angeordnete Grundplattenanordnung (16), die eine Grundplatte (18) und sich von der Grundplatte in Richtung der Brennkammer erstreckende Düsenkörper (20) für eine zweite Treibstoffkomponente aufweist, wobei die Düsenkörper (20) mit den Auslassöffnungen (14) korrespondieren,
- eine zwischen der Frontplatte (12) und der Grundplatte (18) angeordnete erste Verteilerplatte (22),
- einen ersten Gehäuseabschnitt (G1) mit einem ersten Teil (G11) und einem zweiten Teil (G12), wobei im ersten Teil (G11) ein erster Treibstoffzulauf (40) für die erste Treibstoffkomponente ausgebildet ist, und wobei der erste Teil (G11), die erste Verteilerplatte (22) und die Grundplatte (18) eine erste Treibstoffkammer (42) für die erste Treibstoffkomponente begrenzen,
- einen zweiten Gehäuseabschnitt (G2), der sich senkrecht zur Frontplatte (12) erstreckt, wobei der zweite Gehäuseabschnitt (G2), die Frontplatte (12) und die erste Verteilerplatte (22) eine zweite Treibstoffkammer (44) für die erste Treibstoffkomponente begrenzen, und
- einen dritten Gehäuseabschnitt (G3), der auf einer dem zweiten Gehäuseabschnitt (G2) entgegengesetzten Seite des ersten Gehäuseabschnitts (G1) angeordnet ist und in dem ein zweiter Treibstoffzulauf (52) für die zweite Treibstoffkomponente ausgebildet ist
wobei die Düsenkörper (20) die erste Verteilerplatte (22) durchsetzen, und
wobei in Bereichen der ersten Verteilerplatte (22) um die die erste Verteilerplatte (22) durchsetzenden Düsenkörper (20) jeweils eine oder mehrere Durchgangsöffnungen (24, 26) ausgebildet sind.

2. Einspritzkopf (10) nach Anspruch 1, wobei zumindest ein Teil der Durchgangsöffnungen zwischen dem Düsenkörper (20) und der ersten Verteilerplatte (22) ausgebildet ist.

3. Einspritzkopf nach Anspruch 1 oder 2, wobei die Durchgangsöffnungen einen Ringspalt (24) umfassen, der sich zumindest abschnittsweise entlang des Umfangs des jeweiligen Düsenkörpers (20) erstreckt.

4. Einspritzkopf (10) nach einem der vorhergehenden Ansprüche, wobei die Durchgangsöffnungen eine oder mehrere Löcher (26) umfassen, deren Durchmesser geringer als der Durchmesser (D) der Düsenkörper (20) ist und/oder die beabstandet von den Düsenkörpern (20) angeordnet sind, und/oder
wobei die Durchgangsöffnungen einen oder mehrere Schlitze umfassen, dessen/deren jeweilige Grundform dreieckig, quadratisch, rechteckig oder polygonal ist.

5. Einspritzkopf (10) nach Anspruch 4, wobei eine Achse der Durchgangsöffnungen (26) im Wesentlichen parallel zur Längsachse (A) der Düsenkörper (20) und/oder senkrecht zur ersten Verteilerplatte (22) verläuft.

6. Einspritzkopf (10) nach einem der vorhergehenden Ansprüche, wobei zumindest ein Teil der Durchgangsöffnungen, insbesondere entlang einer geschlossenen Kurve (K), um die Düsenkörper (20) herum angeordnet ist.

7. Einspritzkopf (10) nach einem der vorhergehenden Ansprüche, wobei ein oder mehrere der Düsenkörper (20) jeweils in eine der Auslassöffnungen (14) hineinragen, und/oder
wobei um mindestens eine der Auslassöffnungen (14) eine Wulst (38) ausgebildet ist, die sich von der Frontplatte (12) in Richtung der Grundplatte (18) erhebt.

8. Einspritzkopf (10) nach Anspruch 1, ferner umfassend eine Rückplatte (28),
wobei der dritte Gehäuseabschnitt (G3), die Rückplatte (28) und eine zwischen der Rückplatte (28) und der Grundplatte (18) angeordnete zweite Verteilerplatte (46) eine dritte Treibstoffkammer (48) für die zweite Treibstoffkomponente begrenzen und/oder,
wobei ein Treibstoffeinlass (30) jedes Düsenkörpers (20) fluidisch mit dem zweiten Treibstoffzulauf (52) verbunden ist.

9. Einspritzkopf (10) nach einem der vorhergehenden Ansprüche, wobei die Grundplattenanordnung (16) einstückig hergestellt ist und/oder wobei die erste Verteilerplatte (22) die Düsenkörper (20) kontaktiert.

10. Einspritzkopf (10) nach einem der vorhergehenden Ansprüche, wobei die Frontplatte (12) und die erste Verteilerplatte (22) einstückig hergestellt sind, und/oder wobei die Frontplatte (12), die erste Verteilerplatte (22) und der zweite Gehäuseabschnitt (G2) einstückig hergestellt sind.

11. Einspritzkopf (10) nach einem der vorhergehenden Ansprüche, wobei zwischen der Frontplatte (12) und der ersten Verteilerplatte (22) Rippen angeordnet sind, die die zweite Treibstoffkammer (44) in Taschen, in denen die Düsenkörper (20) die zweite Treibstoffkammer (44) durchsetzen, unterteilt,
wobei die Rippen so angeordnet und dimensioniert sind, dass die Taschen untereinander fluidisch kommunizieren oder fluidisch voneinander getrennt sind.

12. Triebwerk, insbesondere Raketentriebwerk, mit einem Einspritzkopf (10) nach einem der vorhergehenden Ansprüche sowie einer Brennkammer.

13. Rakete mit einem Einspritzkopf (10) nach einem der Ansprüche 1 bis 11 oder einem Triebwerk nach Anspruch 12.

14. Verfahren zum Herstellen eines Einspritzkopfs (10) für ein Triebwerk, umfassend:
- Bereitstellen einer eine Brennkammer des Triebwerks begrenzenden Frontplatte (12) mit Auslassöffnungen (14) für eine erste Treibstoffkomponente,
- Anordnen einer Grundplattenanordnung (16) auf einer der Brennkammer abgewandten Seite der Frontplatte (12), wobei die Grundplattenanordnung (16) eine Grundplatte (18) und sich von der Grundplatte in Richtung der Brennkammer erstreckende Düsenkörper (20) für eine zweite Treibstoffkomponente aufweist, wobei die Düsenkörper (20) mit den Auslassöffnungen (14) korrespondieren,
- Bereitstellen einer ersten Verteilerplatte (22) zwischen der Frontplatte (12) und der Grundplatte (18), so dass die Düsenkörper (20) die erste Verteilerplatte (22) durchsetzen,
- Ausbilden jeweils einer oder mehrerer Durchgangsöffnungen (24, 26) in Bereichen der ersten Verteilerplatte (22) um die die erste Verteilerplatte (22) durchsetzenden Düsenkörper (20),
- Bereitstellen eines ersten Gehäuseabschnitts (G1) mit einem ersten Teil (G11) und einem zweiten Teil (G12), wobei im ersten Teil (G11) ein erster Treibstoffzulauf (40) für die erste Treibstoffkomponente ausgebildet ist, und wobei der erste Teil (G11), die erste Verteilerplatte (22) und die Grundplatte (18) eine erste Treibstoffkammer (42) für die erste Treibstoffkomponente begrenzen,
- Bereitstellen eines zweiten Gehäuseabschnitts (G2), der sich senkrecht zur Frontplatte (12) erstreckt, wobei der zweite Gehäuseabschnitt (G2), die Frontplatte (12) und die erste Verteilerplatte (22) eine zweite Treibstoffkammer (44) für die erste Treibstoffkomponente begrenzen, und
- Anordnen eines dritten Gehäuseabschnitts (G3) auf einer dem zweiten Gehäuseabschnitt (G2) entgegengesetzten Seite des ersten Gehäuseabschnitts (G1), wobei in dem dritten Gehäuseabschnitt (G3) ein zweiter Treibstoffzulauf (52) für die zweite Treibstoffkomponente ausgebildet ist.

15. Verfahren nach Anspruch 14, wobei das Bereitstellen der Frontplatte (12) und der ersten Verteilerplatte (22) umfassen:
- Bereitstellen eines einzelnen Stück Werkstoffs, und
- Fräsen der Treibstoffkammer (44) für die erste Treibstoffkomponente aus dem Stück Werkstoff, wobei die Frontplatte (12) mit Rippen versehen ist,
wobei das Fräsen bevorzugt durch einen T-Nut-Fräser durchgeführt wird.

## Claims

1. An injection head (10) for an engine, comprising:
- a front plate (12) delimiting a combustion chamber of the engine, with outlet openings (14) for a first fuel component,
- a baseplate arrangement (16) arranged on a side of the front plate (12) facing away from the combustion chamber, the baseplate arrangement (16) comprising a base plate (18) and nozzle bodies (20) extending from the base plate in the direction of the combustion chamber for a second fuel component, the nozzle bodies (20) corresponding to the outlet openings (14),
- a first distributor plate (22) arranged between the front plate (12) and the base plate (18),
- a first housing section (G1) with a first part (G11) and a second part (G12), wherein a first fuel inlet (40) for the first fuel component is formed in the first part (G11), and wherein the first part (G11), the first distributor plate (22) and the base plate (18) delimit a first fuel chamber (42) for the first fuel component,
- a second housing section (G2) extending perpendicular to the front plate (12), wherein the second housing section (G2), the front plate (12) and the first distributor plate (22) delimit a second fuel chamber (44) for the first fuel component; and
- a third housing section (G3) disposed on a side of the first housing section (G1) opposite to the second housing section (G2) and having formed therein a second fuel inlet (52) for the second fuel component,
wherein the nozzle bodies (20) pass through the first distributor plate (22), and
wherein one or more through holes (24, 26) are formed in regions of the first distributor plate (22) around the nozzle bodies (20) passing through the first distributor plate (22).

2. The injection head (10) according to claim 1, wherein at least a part of the through holes is formed between the nozzle body (20) and the first distributor plate (22).

3. The injection head according to claim 1 or 2, wherein the through holes comprise an annular gap (24) which extends at least in sections along the circumference of the respective nozzle body (20).

4. The injection head (10) according to one of the preceding claims, wherein the through holes comprise one or more holes (26), the diameter of which is smaller than the diameter (D) of the nozzle bodies (20) and/or which are arranged at a distance from the nozzle bodies (20), and/or
where the through holes comprise one or more slits, the basic shape of which is triangular, square, rectangular or polygonal.

5. The injection head (10) according to claim 4, wherein an axis of the through holes (26) is substantially parallel to the longitudinal axis (A) of the nozzle bodies (20) and/or perpendicular to the first distributor plate (22).

6. The injection head (10) according to one of the preceding claims, wherein at least a part of the through holes, in particular along a closed curve (K), being arranged around the nozzle bodies (20).

7. The injection head (10) according to one of the preceding claims, wherein one or more of the nozzle bodies (20) each project into one of the outlet openings (14), and/or
wherein a bulge (38) is formed around at least one of the outlet openings (14) and rises from the front plate (12) in the direction of the base plate (18).

8. The injection head (10) according to claim 1, further comprising a back plate (28),
wherein the third housing section (G3), the rear plate (28) and a second distributor plate (46) arranged between the rear plate (28) and the base plate (18) delimit a third fuel chamber (48) for the second fuel component and/or,
wherein a fuel inlet (30) of each nozzle body (20) is fluidically connected to the second fuel inlet (52).

9. The injection head (10) according to one of the preceding claims, wherein the base plate assembly (16) is made in one piece and/or wherein the first distributor plate (22) contacts the nozzle bodies (20).

10. The injection head (10) according to one of the preceding claims, wherein the front plate (12) and the first distributor plate (22) are made in one piece, and/or wherein the front plate (12), the first distributor plate (22) and the second housing section (G2) are made in one piece.

11. The injection head (10) according to one of the preceding claims, wherein ribs are arranged between the front plate (12) and the first distributor plate (22) which divide the second fuel chamber (44) into pockets in which the nozzle bodies (20) pass through the second fuel chamber (44),
where the ribs are arranged and dimensioned in such a way that the pockets communicate fluidically with each other or are fluidically separated from each other.

12. An engine, in particular a rocket engine, with an injection head (10) according to one of the preceding claims and a combustion chamber.

13. A rocket with an injection head (10) according to one of claims 1 to 11 or an engine according to claim 12.

14. A method of manufacturing an injection head (10) for an engine, comprising:
- providing a front plate (12) delimiting a combustion chamber of the engine with outlets (14) for a first fuel component,
- arranging a base plate arrangement (16) on a side of the front plate (12) facing away from the combustion chamber, wherein the base plate arrangement (16) has a base plate (18) and nozzle bodies (20) extending from the base plate in the direction of the combustion chamber for a second fuel component, the nozzle bodies (20) corresponding to the outlet openings (14),
- providing a first distributor plate (22) between the front plate (12) and the base plate (18) so that the nozzle bodies (20) pass through the first distributor plate (22),
- forming one or more through openings (24, 26) in each area of the first distributor plate (22) around the nozzle bodies (20) passing through the first distributor plate (22),
- providing a first housing section (G1) with a first part (G11) and a second part (G12), wherein a first fuel inlet (40) for the first fuel component is formed in the first part (G11), and wherein the first part (G11), the first distributor plate (22) and the base plate (18) delimit a first fuel chamber (42) for the first fuel component,
- providing a second housing section (G2) extending perpendicular to the front plate (12), the second housing section (G2), the front plate (12) and the first distributor plate (22) delimit a second fuel chamber (44) for the first fuel component; and
- arranging a third housing section (G3) on a side of the first housing section (G1) opposite to the second housing section (G2), wherein a second fuel inlet (52) for the second fuel component is formed in the third housing section (G3).

15. The method according to claim 14, wherein providing the front plate (12) and the first distributor plate (22) comprises:
- providing a single piece of material, and
- milling the fuel chamber (44) for the first fuel component from the piece of material, the front plate (12) being provided with ribs,
whereby the milling is preferably carried out by a T-slot milling cutter.

## Revendications

1. Tête d'injection (10) pour un moteur, comportant :
- une plaque frontale (12) délimitant une chambre de combustion du moteur et comprenant des ouvertures de sortie (14) pour un premier composant de carburant,
- un agencement de plaque de base (16) disposé sur un côté de la plaque frontale (12) opposé à la chambre de combustion, comprenant une plaque de base (18) et des corps de buse (20) s'étendant à partir de la plaque de base en direction de la chambre de combustion pour un deuxième composant de carburant, les corps de buse (20) correspondant aux ouvertures de sortie (14),
- une première plaque de distribution (22) disposée entre la plaque frontale (12) et la plaque de base (18),
- une première section (G1) formant carter avec une première partie (G11) et une deuxième partie (G12), une première arrivée de carburant (40) pour le premier composant de carburant étant formée dans la première partie (G11), et la première partie (G11), la première plaque de distribution (22) et la plaque de base (18) délimitant une première chambre de carburant (42) pour ledit premier composant de carburant,
- une deuxième section (G2) formant carter s'étendant perpendiculairement à la plaque frontale (12), la deuxième section (G2) formant carter, la plaque frontale (12) et la première plaque de distribution (22) délimitant une deuxième chambre de carburant (44) pour ledit premier composant de carburant, et
- une troisième section (G3) formant carter disposée sur un côté de la première section (G1) formant carter opposé à la deuxième section (G2) formant carter et dans laquelle est formée une deuxième arrivée de carburant (52) pour ledit deuxième composant de carburant,
dans laquelle les corps de buse (20) traversent la première plaque de distribution (22), et
dans laquelle une ou plusieurs ouvertures de passage (24, 26) sont formées respectivement dans des zones de la première plaque de distribution (22) autour des corps de buse (20) traversant la première plaque de distribution (22).

2. Tête d'injection (10) selon la revendication 1, dans laquelle au moins une partie des ouvertures de passage sont formées entre le corps de buse (20) et la première plaque de distribution (22).

3. Tête d'injection selon la revendication 1 ou 2, dans laquelle les ouvertures de passage comprennent une fente annulaire (24) qui s'étend au moins par sections le long de la circonférence du corps de buse (20) respectif.

4. Tête d'injection (10) selon l'une des revendications précédentes, dans laquelle les ouvertures de passage comprennent un ou plusieurs trous (26) dont le diamètre est inférieur au diamètre (D) des corps de buse (20) et/ou qui sont disposés à distance des corps de buse (20), et/ou
dans laquelle les ouvertures de passage comprennent une ou plusieurs fentes dont la forme de base respective est triangulaire, carrée, rectangulaire ou polygonale.

5. Tête d'injection (10) selon la revendication 4, dans laquelle un axe des ouvertures de passage (26) s'étend sensiblement parallèlement à l'axe longitudinal (A) des corps de buse (20) et/ou perpendiculairement à la première plaque de distribution (22).

6. Tête d'injection (10) selon l'une des revendications précédentes, dans laquelle au moins une partie des ouvertures de passage, en particulier le long d'une courbe fermée (K), est disposée autour des corps de buse (20).

7. Tête d'injection (10) selon l'une des revendications précédentes, dans laquelle un ou plusieurs des corps de buse (20) font saillie respectivement dans l'une des ouvertures de sortie (14), et/ou
dans laquelle un bourrelet (38) est formé autour d'au moins une des ouvertures de sortie (14), qui s'élève à partir de la plaque frontale (12) en direction de la plaque de base (18).

8. Tête d'injection (10) selon la revendication 1, comportant en outre une plaque arrière (28),
dans laquelle la troisième section (G3) formant carter, la plaque arrière (28) et une deuxième plaque de distribution (46) disposée entre la plaque arrière (28) et la plaque de base (18) délimitent une troisième chambre de carburant (48) pour ledit deuxième composant de carburant, et/ou
dans laquelle une entrée de carburant (30) de chaque corps de buse (20) est en liaison fluidique avec la deuxième arrivée de carburant (52).

9. Tête d'injection (10) selon l'une des revendications précédentes, dans laquelle l'agencement de plaque de base (16) est réalisé en une seule pièce et/ou dans laquelle la première plaque de distribution (22) est en contact avec les corps de buse (20).

10. Tête d'injection (10) selon l'une des revendications précédentes, dans laquelle la plaque frontale (12) et la première plaque de distribution (22) sont réalisées en une seule pièce, et/ou dans laquelle la plaque frontale (12), la première plaque de distribution (22) et la deuxième section (G2) formant carter sont réalisées en une seule pièce.

11. Tête d'injection (10) selon l'une des revendications précédentes, dans laquelle des nervures sont disposées entre la plaque frontale (12) et la première plaque de distribution (22), divisant la deuxième chambre de carburant (44) en poches dans lesquelles les corps de buse (20) traversent la deuxième chambre de carburant (44),
dans laquelle les nervures sont disposées et dimensionnées de telle sorte que les poches communiquent fluidiquement entre elles ou sont séparées fluidiquement les unes des autres.

12. Moteur, en particulier moteur-fusée, avec une tête d'injection (10) selon l'une des revendications précédentes ainsi qu'une chambre de combustion.

13. Fusée avec une tête d'injection (10) selon l'une des revendications 1 à 11 ou un moteur selon la revendication 12.

14. Procédé de fabrication d'une tête d'injection (10) pour un moteur, comprenant les étapes de :
- fournir une plaque frontale (12) délimitant une chambre de combustion du moteur et comprenant des ouvertures de sortie (14) pour un premier composant de carburant,
- disposer un agencement de plaque de base (16) sur un côté de la plaque frontale (12) opposé à la chambre de combustion, l'agencement de plaque de base (16) présentant une plaque de base (18) et des corps de buse (20) s'étendant à partir de la plaque de base en direction de la chambre de combustion pour un deuxième composant de carburant, les corps de buse (20) correspondant aux ouvertures de sortie (14),
- fournir une première plaque de distribution (22) entre la plaque frontale (12) et la plaque de base (18) de telle sorte que les corps de buse (20) traversent la première plaque de distribution (22),
- former respectivement une ou plusieurs ouvertures de passage (24, 26) dans des zones de la première plaque de distribution (22) autour des corps de buse (20) traversant la première plaque de distribution (22),
- fournir une première section (G1) formant carter avec une première partie (G11) et une deuxième partie (G12), une première arrivée de carburant (40) pour le premier composant de carburant étant formée dans la première partie (G11), et la première partie (G11), la première plaque de distribution (22) et la plaque de base (18) délimitant une première chambre de carburant (42) pour ledit premier composant de carburant,
- fournir une deuxième section (G2) formant carter s'étendant perpendiculairement à la plaque frontale (12), la deuxième section (G2) formant carter, la plaque frontale (12) et la première plaque de distribution (22) délimitant une deuxième chambre de carburant (44) pour ledit premier composant de carburant, et
- disposer une troisième section (G3) formant carter sur un côté de la première section (G1) formant carter opposé à la deuxième section (G2) formant carter, une deuxième arrivée de carburant (52) pour ledit deuxième composant de carburant étant formée dans la troisième section (G3) formant carter.

15. Procédé selon la revendication 14, dans lequel l'étape de fournir la plaque frontale (12) et la première plaque de distribution (22) consiste à :
- fournir une seule pièce de matériau, et
- fraiser la chambre de carburant (44) pour ledit premier composant de carburant à partir de la pièce de matériau, la plaque frontale (12) étant munie de nervures,
dans lequel le fraisage est effectué de préférence par une fraise à rainure en T.
